# EUROPEAN PATENT APPLICATION

(11) **EP 3 276 880 A1**
(43) Date of publication of application: **31.01.2018**
(21) Application number: 16305978.5
(22) Date of filing: 28.07.2016
(51) Int. Cl.: H04L 9/32, G06F 7/72

(54) **EFFICIENT ECDSA SIGNATURE AND VERIFICATION**

(71) Applicant: GEMALTO SA, 92190 Meudon (FR)
(72) Inventor: SINARDI, Guntur, 92190 MEUDON (FR); BEN YOUSSEF, Tarek, 92190 MEUDON (FR)
(74) Representative: Lotaut, Yacine Diaw

(57) **Abstract**

The verification and signature processes of the cryptosystem Elliptic Curve digital Signature Algorithm (ECDSA) require an efficient implementation of modular multiplication. Montgomery modular multiplication consists in replacing division by an arbitrary number with division by a fixed number. Montgomery multiplication requires costly pre-computation of a constant R² to change the representation of the operands from scalar representation to Montgomery representation. Embodiments propose a faster method for performing ECDSA verification and signature processes using the Montgomery multiplication, which avoids the costly pre-calculation of the Montgomery constant R², by making use of the Montgomery multiplication properties and little Fermat theorem.

## Description

### BACKGROUND

### Technical Field

The present invention relates to an Elliptic Curve Digital Signature Algorithm (ECDSA) signature and verification algorithm in Elliptic Curve Cryptography (ECC) over prime field.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

ECDSA is an algorithm of numerical signature using a public and private key. The public key is accessible to everybody, and everybody can check the integrity of the message and the authenticity of the entity that has been sent.

This algorithm uses the concepts of Elliptic Curve Cryptography. To use ECC, the emitting and receiving parties must agree on all the elements defining the elliptic curve, that is, the domain parameters of the scheme. The field is defined by a prime integer *n,* in the case of ECC over prime field. The curve is defined by a series of points having coordinates *x* and *y* which satisfy the equation *y²=x³*+*ax*+*b*. The elliptic curve is thus defined by the constants *a* and *b* used in its defining equation. Each couple of coordinates *(x,y)* is an element of the underlying field, as each point of the curve is defined by a pair of field elements.

ECDSA works with a private key scalar *d,* and the clear text message *m.* The output is a bi-dimensional signature *(r,s)*, wherein the component *r* and s of the signature are integers. There is further defined *n* as the Curve Order, which is a prime number, and G as the Generator point of the Elliptic Curve.

Considering that Alice wants to sign a message *m* using the ECDSA algorithm to Bob, Alice shall use a pair of keys *(d,Q)*, where *d* is the private key and *Q* is the public key. The public *Q* is obtained according to the following process:
- an integer *k* is chosen within the range between *1* and *n-1*;
- there is calculated *Q - kP* where *Q* is the public key and *P* is a point of the elliptic curve *E(K)* of prime order *n*, where *K* is a finite corps; and,
- the private key *d* is given by *s-log_{P}(Q) mod n.*

In the above, and throughout the following specification, the vocable « *mod n* » stands for « *modulus n* ». The logarithm guarantees the difficulty to find the private key *d* knowing the public key *Q*.

Let us first present the ECDSA signature process.

A digital signature is a bi-dimensional value which allows the recipient of a message to verify the message's authenticity using the authenticator's public key.

To digitally sign a message *m,* the following steps are performed:
1. Select a random integer *k,* such that *1* ≤ *k* ≤ *n-1*
2. Compute *k*×*G* = *(x1,y1)* and *r* = *x1 mod n.*
   If *r = 0* then go back to step 1.
3. Then compute *k⁻¹ mod n.*
4. Further, compute *e*=*SHA-1(m)* where SHA is a hash function that converts the variable length message to a fixed-length message digest. A secure hash function does have the following distinctive properties:
   - Irreversibility: it is computationally infeasible to determine the message from its digest
   - Collision resistance: it is impractical to find more than one message that produces a given digest
   - High avalanche effect: any change in the message produces a significant change in the digest
5. Finally, compute *s* = *k⁻¹(e+d*×*r) mod n.*
   If *s* = *0* then go back to step 1.

The signature of the message is composed of the couple of integers *(r,s)*.

Let us now turn to the ECDSA verification process.

The purpose of the verification process is to verify the message's authenticity using the authenticator's public key. Using the same secure hash algorithm as in the signature process, the message digest signed by the authenticator is computed. This digest, along with the public key *Q(x,y)* and the digital signature components rand s, leads to the result.

More precisely, the following steps are performed:
1. First verify that *r* and s are integers within the interval [1;n-1]
2. If so, then compute *e = SHA-1(m)*
3. Compute *w*= *s⁻¹mod n*
4. Compute *u₁* = *e*×*w mod n and u₂ = r*×*w mod n*
5. Then compute *X* = *u₁G* + *u₂Q*
6. Further compute *v*=*x₁ mod n* where *X = (x₁,y₁)*
7. Finally, accept the signature as valid if, and only if *v* = *r.*

The Montgomery Multiplication is widely used to speed-up the modular arithmetic calculation in both the signature and verification processes as presented above. More specifically, it is used for the calculation of the inverse *k⁻¹* and *s⁻¹*, respectively. The Montgomery Multiplication between any values *x* and *y* is defined as *M(x,y) = x*×*y*×*R⁻¹ mod n,* or simply *x*×*y*×*R⁻¹*. The Montgomery Constant is denoted by *R² mod n,* where *R* is coprime with *n*. This constant is needed to change from normal form to Montgomery form. Indeed, for any value *x*, the "Montgomery form of *x*" is given by *x*×*R mod n* or simply *x*×*R.*

Thus, the methods known in the current state of the art need to precompute *R*² to be able to get the Montgomery form. However, precomputing the constant R² is a costly operation in terms of calculation power and memory space needed.

### SUMMARY

The present invention proposes an improved method that avoids the calculation of *R*² and thus simplify the calculations carried out in the ECDSA signature and verification processes.

To that end, there is proposed to use exponentiation based on Montgomery multiplications, which can be noted ME for the purpose of the following explanation. For any integer "*a*" converted in the Montgomery form *a.R mod n* and for an exponent *"e",* the exponentiation ME to the power e would result in *ME (a.R mod n,e) = a^{e}xR mod n.* One important observation is that the result of the exponentiation is already the Montgomery form of *a^{e}.*

In embodiments of the signature scheme according to the invention, there is used the same exponentiation based on Montgomery multiplications ME applied as *ME(k,n-2),* where *"k"* can be further written as *"kxR⁻¹xR"* and thus the above "*a*" is just equal to *"kxR⁻¹".* It can then be deduced *ME(k,n-2)=(k×R⁻¹)ⁿ⁻²xR mod n = k⁻¹xR² mod n* since *n* is prime. The one with ordinary skills in the art will appreciate that no conversion to Montgomery is needed and no multiplication by *R* is needed. The improvement is thus achieved by simply injecting "*k*" in the exponentiation based on Montgomery multiplications (ME).

Further, the same method is applied in embodiments of the verification scheme according to the invention, where "*k*" is replaced by *"s".*

Indeed, according to a fist aspect, there is proposed a cryptographic method comprising an Elliptic Curve Digital Signature Algorithm (ECDSA) signature scheme comprising:
- generating a bi-dimensional signature *(r,s)* having a first signature component *r* and a second signature component *s,* said bi-dimensional signature *(r,s)* being associated to a message *m*,
wherein generating the bi-dimensional signature *(r,s)* comprises:
- generating a random number *k*;
- obtaining a bi-dimensional value *(x₁,y₁)* having a first component *x₁* and a second component *y₁*, and corresponding to *kxG,* where *G* is a bi-dimensional generator point of the elliptic curve;
- setting *r* to *x₁* modulus *n*, where *n* is a prime number corresponding to the elliptic curve order;
- generating s as *k⁻¹*×*(e*+*r*×*d),* where *k⁻¹* is the inverse of *k,* where *d* is a private key scalar number and where *e* equals *H(m)* with *H* being a hash function, said generating comprising :
   - calculating a first value *(e*+*r*×*d)*×*R⁻¹* by the addition of the Montgomery multiplication of *r* and *d* modulus *n,* to the Montgomery multiplication of *e* and unity modulus *n ;*
   - calculating a second value *(k*×*R⁻¹)ⁿ⁻²*×*R* as the exponentiation of the Montgomery form of *k×R⁻¹* to the power *n-2* modulus *n,* and thus obtaining *k⁻¹×R²* as said second value because this second value is mathematically equivalent to *k⁻¹×R²* as a result of Fermat's little Theorem,
   - obtaining *s* by calculating the Montgomery multiplication between the second value *k⁻¹×R²* and the first value *(e+r×d)×R⁻¹ mod n.*

A second aspect of the invention relates to a computer program product comprising one or more stored sequences of instructions that are accessible to a processor and which, when executed by the processor, cause the processor to carry out the steps of the method of the above first aspect.

A third aspect of the invention relates to a cryptographic system comprising:
- an interface unit for receiving a message *m* and for outputting a bi-dimensional signature *(r,s)* associated to said message *m*; and,
- a computer unit adapted to generate the bi-dimensional signature *(r,s)* using an Elliptic Curve Digital Signature Algorithm (ECDSA) signature scheme according to the above first aspect.

A fourth aspect of the invention relates to a cryptographic method comprising an Elliptic Curve Digital Signature Algorithm (ECDSA), verification scheme, wherein the verification scheme comprises:
- receiving a bi-dimensional signature *(r,s)* having a first signature component *r* and a second signature component *s,* said bi-dimensional signature *(r,s)* being associated to a message *m;*
- generating the Montgomery form of *s⁻¹*, where *s⁻¹* is the inverse of *s,* said generating comprising:
   - calculating a first value *(s×R⁻¹)ⁿ⁻²×R* as the exponentiation of the Montgomery form of *s×R⁻¹* to the power *n-2,* where *n* is a prime number corresponding to the elliptic curve order and *R* is a given number coprime with *n,* with *R² mod n* being the Montgomery Constant, and thus obtaining *s⁻¹×R²* as said first value because said first value is mathematically equivalent to *s⁻¹×R²* thanks to Fermat's little Theorem,
   - calculating the Montgomery Multiplication of the reduced first value *s⁻¹×R²* with the unity, to obtain a second value *s⁻¹×R mod n,*
- calculating a third value u₁ as the Montgomery multiplication between the second value *s⁻¹×R* and *e modulus N,* where e equals *H(m)* with *H* being a hash function; and
- calculating a fourth value *u₂* as the Montgomery multiplication between the second value *s⁻¹×R* and the first signature component *r modulus N,* and
- calculating a bi-dimensional value *(x₁,y₁)* having a first component *x₁* and a second component *y₁,* and corresponding to the addition of *u₁*×*G* and *u₂×Q*, where *G* is a bi-dimensional generator point of the elliptic curve and Q is a public key point which equals *d×G*, with *d* being a private key scalar number; and,
- determining that the signature is valid if the first component value *x₁ modulus N* of the bi-dimensional value *(x₁,y₁)* equals *r*.

A fifth aspect of the invention relates to a computer program product comprising one or more stored sequences of instructions that are accessible to a processor and which, when executed by the processor, cause the processor to carry out the steps of the method according to the above fourth aspect.

Finally, a sixth aspect of the invention relates to a cryptographic system comprising:
- an interface unit for receiving a bi-dimensional signature *(r,s)* associated to a message *m*; and,
- a computer unit (30) adapted to determine whether the signature *(r,s)* is valid using an Elliptic Curve Digital Signature Algorithm (ECDSA) signature scheme according to the fourth aspect.

As will become more apparent from the description of preferred embodiments which will be provided below, the proposed method uses the inverse Montgomery form to generate the ECDSA signature, and proceed with ECDSA verification without calculating the constant *R²*. The approach essentially consists in modifying the algorithm embedded in smart card, for instance, in order to take advantage of the Montgomery multiplication properties so as to render the pre-computation of the constant *R²* useless.

Embodiments of the invention are expected to significantly reduce the delay of calculation methods for the signature and verification processes, since the heavy calculation of *R²* is not needed anymore.

### BRIEF DESCRIPTION OF THE DRAWINGS

Embodiments of the present invention are illustrated by way of example, and not by way of limitation, in the figures of the accompanying drawings, in which like reference numerals refer to same or similar elements, and in which:
- Figure 1 is a flow chart illustrating steps of a signature process according to the prior art;
- Figure 2 is a flow chart illustrating steps of a verification process according to the prior art;
- Figure 3 is a flow chart illustrating steps of a signature process according to embodiments of the first aspect of the present invention;
- Figure 4 is a flow chart illustrating steps of a verification process according to embodiments of the fourth aspect of the present invention; and,
- Figure 5 is a block diagram of an embodiment of cryptographic systems according to the third aspect and the sixth aspect of the invention, which are adapted to run computer program products according to the second aspect and to the fifth aspect of the invention, respectively.

### DESCRIPTION OF PREFERRED EMBODIMENTS

To get the signature and its verification using ECDSA in ECC over prime field, order of the Generator Point (also called Curve Order *n*, which is a prime number) is used as a modulus in a significant part of the calculation. The Montgomery Multiplication is a widely used method allowing to speed-up arithmetic operations such as the inversion of a given variable. Indeed, modular inversion using Montgomery Multiplication is faster than the standard, *i.e.* scalar inversion.

The problem with Montgomery Multiplication is the need to precompute a constant *R² mod n,* commonly denoted by *R².* This constant is needed for computing the conversion of the operand from normal form to Montgomery form, and vice versa.

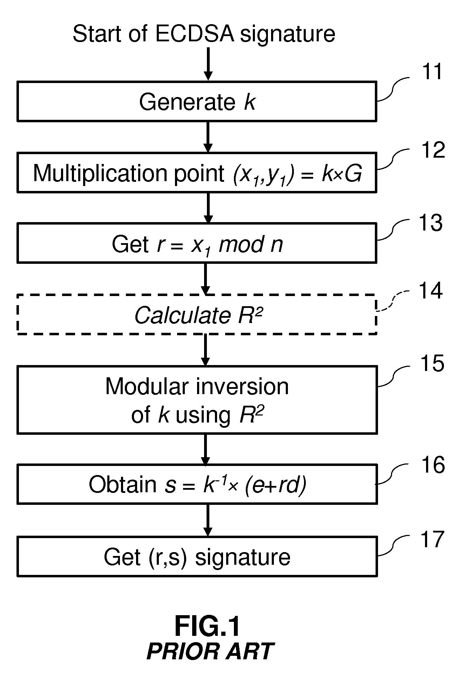

With reference to the flow chart of **Figure 1**, a method of calculating the signature of a clear text message *e* according to standard algorithm using the Montgomery comprises the following steps.

At 11, a random integer *k* is generated.

At 12, the bi-dimensional value *(x₁,y₁)* is obtained through the calculation of *k×G,* where *G* is the bi-dimensional generator point of the elliptic curve.

At 13, calculation of *r* is performed by equating *r* with *x₁ mod N.*

At 14, the constant *R²* is calculated in order to be able to switch from normal representation to Montgomery representation.

At 15, the modular inversion of *k* is generated.

At 16, the component s of the signature is calculated by *s* = *k⁻¹(e*+*rd).*

Finally, at 17, the elements rand s of the signature are made available to, *e.g.* the application program which shall use them.

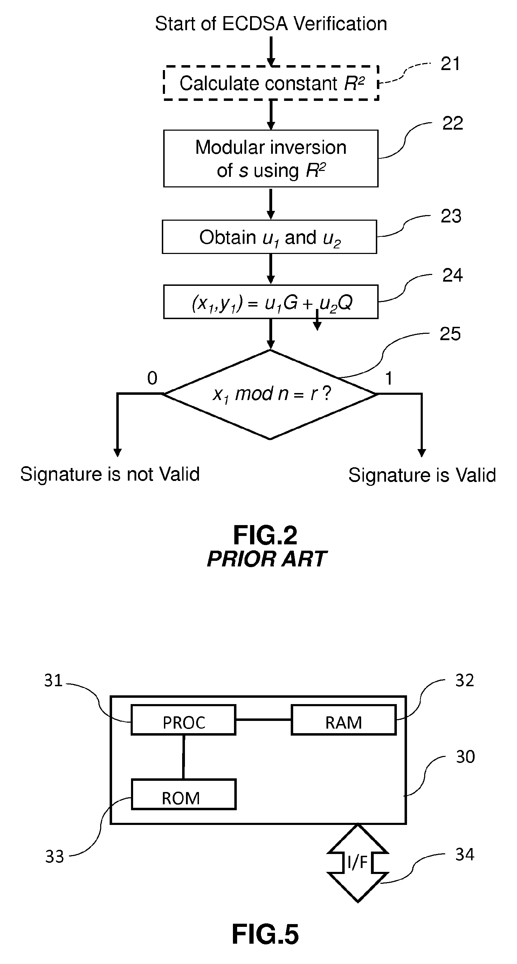

With reference to the flow chart of **Figure 2** the basic steps of a method of ECDSA verification according to the prior art comprises the following steps.

At 21, first, the calculation of *R²* is performed.

Then, at 22, the modular inversion of s is calculated.

At 23, there is performed the calculation of *u₁* which equals *s⁻¹*×*e*, and of *u₂* which is equal to *s⁻¹×r*.

The calculation of the elements *(x₁,y₁)* is executed at 24. More precisely, *(x₁,y₁)* equals to *u₁G+u₂Q*.

Finally, at 25, the signature is validated if and only if the first component value *x₁* modulus *N* of the bi-dimensional value *(x₁,y₁)* equals *r.*

Now, the pre-computation of *R²* at step 11 of the ECDSA signature generation scheme and at step 21 of the ECDSA verification scheme is a costly operation.

Embodiments of the present invention allow proceeding without the need for the calculation of *R²* by using nice properties of Montgomery form and the Montgomery multiplication along with the little Fermat theorem.

By thus avoiding the calculation of *R²,* embodiments lead to faster ECDSA signature and verification schemes.

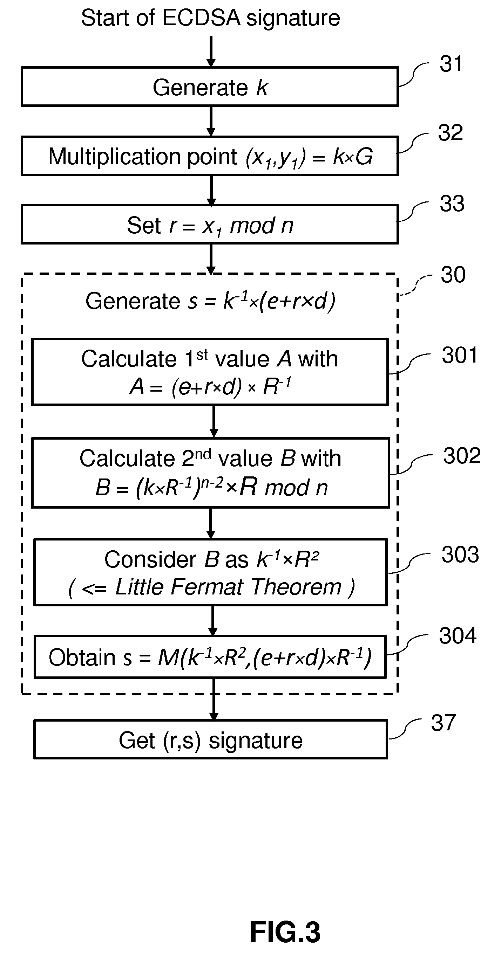

Referring to **Figure 3****,** there is shown therein a low chart illustrating steps of the signature process according to embodiments of the first aspect of the present invention.

First steps 31, 32 and 33 of the method are identical to steps 11, 12 and 13, respectively, of the method according to the prior art as shown in Figure 1 and described in details above. Namely, at 31 a random number k is generated, at 32 the bi-dimensional element *(x₁,y₁) is obtained by setting (x₁,y₁)*= *k×G, and at 33* the first signature component *r* of the signature *(r,s)* is obtained by the following equating : *r= x₁ mod n.* Steps 31 to 33 will not be described again in more details here.

The process then goes on with step 30 which, compared to the process as shown in Figure 1, replaces step 16, along with previous step 15 of modular inversion of *k* using the Montgomery multiplication and, above all, along with the heavy step 14 of pre-calculation of the constant *R².*

At 30, indeed, step 30 with sub-steps 301 to 305 are performed to obtain *s*=*k⁻¹×(e*+*r×d)* instead of steps 14 and 15 of the method according to prior art as previously described with reference to Figure 1.

The proposed method is based on the following observations.

First, the second signature component *s* can be written as the Montgomery form of *s×R⁻¹,* since *s* = *s×R⁻¹×R.*

Second, considering the Montgomery Multiplication and Exponentiation by Squaring method, it can be observed that the exponentiation of « Montgomery form of *s×R⁻¹* » to the power *n-2* equals to « Montgomery form of *(s×R⁻¹)ⁿ⁻²* »*.*

Finally, Fermat's little theorem states that if *n* is a prime number, then for any integer *a*, we have *aⁿ⁻²*=*a⁻¹*.

If *a* is not divisible by *n,* Fermat's little theorem is equivalent to the statement that aⁿ⁻¹ is an integer multiple of *n,* meaning that *aⁿ⁻¹ ≡ 1 mod n.* This further implies that *a×aⁿ⁻² ≡ 1 mod n.* This also means that *aⁿ⁻²* is actually the inverse of *a* modulus *n*.

Hence, provided that *n* is prime, one can opt to raising any value to the exponent n-2 whenever one needs to calculate its inverse modulus *n*.

Here, and since *n* is prime, the little Fermat theorem provides that *(s×R⁻¹)ⁿ⁻²×R* equals to *(s×R⁻¹)⁻¹×R.*

Hence, *s⁻¹*×*R²* is obtained because the above product can be reduced to *s⁻¹*×*R²* by calculating *(s×R⁻¹)⁻¹×R=s⁻¹×R×R=s⁻¹×R².* Stated otherwise, *(s×R⁻¹)^{N-2}×R* is equivalent to *s⁻¹×R².*

In addition, *M(s⁻¹×R²,1) = s⁻¹×R.* Hence, the Montgomery form of *s⁻¹ mod n* can be obtained by calculating the Montgomery multiplication between *s⁻¹×R²* and unity, namely the Montgomery multiplication of *s⁻¹×R²* with 1.

In view of the above observations, step 30 of calculating *s* comprises the following steps 301 to 304.

At 301, the computation of a first value *A* is performed with *A = (e+r×d)×R⁻¹.* This can be achieved, according to embodiments, by adding *M(r,d) = r×d×R⁻¹* and *M(e,1) = e×R⁻¹.* Stated otherwise, *(e+r×d)×R⁻¹* is obtained by the addition of the Montgomery multiplication of *r* and *d* modulus *n* on one hand to the Montgomery multiplication of e and unity modulus *n* on the other hand.

At 302, there is calculated a second value *B*, with *B* = *(k×R⁻¹)ⁿ⁻²×R mod n* as the exponentiation of the Montgomery form of *k×R⁻¹* to the power *n-2* modulus *n*. B is equivalent to *k⁻¹×R²,* as a result of Fermat's little theorem and thus, at 303, B is considered as being *k⁻¹×R².* The one with ordinary skills in the art will appreciate that, so to speak, 303 is a virtual step which is illustrative for the purpose of clarity of the present disclosure only, in the sense that is does not comprise any additional calculations.

At304, *s* is eventually obtained by calculating the Montgomery multiplication between the value *B*, namely *k⁻¹×R²,* which has been obtained at 304, and the first value *A* which has been obtained at 301, namely *(e+r×d)×R⁻¹ mod n.*

Finally, the Signature process ends at 37 with the output of the bi-dimensional signature *(r,s)* associated to the encrypted message m. Step 37 is equivalent to step 17 of Figure 1. This result is thus achieved without the constant *R²* having been computed as such, contrary to what is done in the prior art.

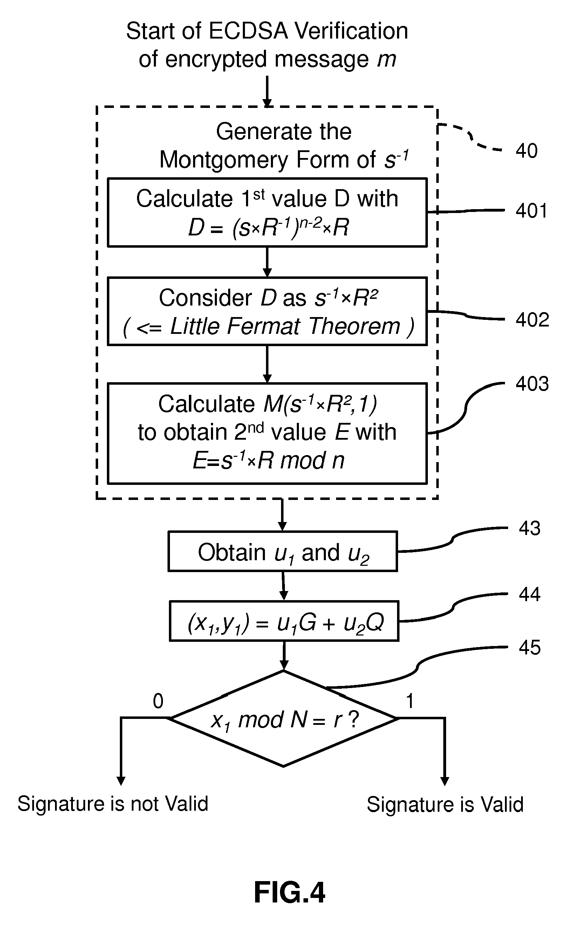

There will now be described steps of a Verification process according to embodiments of the present invention, with reference to **Figure 4**. This process aims at verifying the signature *(r,s)* associated to an encrypted message *m.* This process can be carried out at a recipient level, where the message m is received and is checked for validity.

At 40, the Montgomery form *s⁻¹×R* of *s⁻¹* modulus *n* is calculated. This can be achieved, according to embodiments of the fourth aspect of the present invention, by carrying out the following step 401, 402 and 403.

The goal of this step is to obtain the Montgomery form of *s⁻¹* without the drawback of having to pre-compute the Montgomery constant *R²* as in the prior art.

Similar with ECDSA Signature as described in much details above with reference to step 30 of Figure 3, *s* can be written as *s×R⁻¹×R.* Further, by performing the same inversion method on s itself (similar to the computation of *k⁻¹* in the above described ECDSA Signature process), a first value *D* corresponding to the Montgomery form of *sxR⁻¹* raised at the power *n-2* modulus *n* is obtained at 401.

Then, at 402, the first value *D (sxR⁻¹)ⁿ⁻²xR* is considered in the form *D= s⁻¹×R²* thanks to Fermat's little theorem. , 402 is a virtual step which is illustrative for the purpose of clarity of the present disclosure only, in the sense that is does not comprise any additional calculations.

Hence, *s⁻¹×R* is obtained at 403 by computing the Montgomery multiplication *M(s⁻¹×R²*,*1*) of *s⁻¹×R²* with unity.

Once *s⁻¹×R* is thus obtained, ECDSA Verification can proceed as usual.

Indeed, further step 43 is similar to step 13 of Figure 1, and consists in calculating *u₁*= *s⁻¹×e mod n* and *u₂*= *s⁻¹×R mod n.* Namely:
*u₁* is obtained by computing the Montgomery multiplication between *s⁻¹×R* and *e,* that is to say *M(s⁻¹×R,e) = s⁻¹×e*; and,
*u₂* is obtained by computing the Montgomery multiplication of *s⁻¹×R* with *r, i.e., M(s⁻¹R,r) = s⁻¹×r.*

At 44, the bi-dimensional value *(x₁,y₁)* is calculated as: *(x₁,y₁)*= *u₁×G* + *u₂×Q.* The one with ordinary shills in the art will appreciate that this step is equivalent to step 14 of Figure 1.

At the test 45, if *x₁ mod n* equals to *r,* then it is determined that signature is valid. Otherwise, the bi-dimensional value *(r,s)* is held to be an invalid signature. Again, it will be noted that this final determination step is equivalent to step 15 of Figure 1.

With reference to the block diagram of **Figure 5**, there will now be described embodiments of the cryptosystems according to the third and sixth aspects of the invention. Such cryptosystems can be adapted to run computer program products according to the second and to the fifth aspects of the invention, respectively.

Each of these computer programs comprise one or more stored sequences of instructions that are accessible to a processor and which, when executed by the processor, cause the processor to carry out the corresponding cryptographic method.

In the shown embodiments, the computer unit 30 comprises at least one processor 31, at least one memory 32 to store data used during the execution of the calculations by the processor 31, and at least one rewritable non-volatile memory 33 used to store *e.g.* specific parameters or running commands to properly execute the method.

Memory 32 can be a Random Access Memory (RAM) of any suitable type, for instance a SRAM, a DRAM or SDRAM. Memory 33 can be a Read Only Memory (ROM), of any suitable type for instance an EPROM or a Flash memory.

The cryptosystem further comprises an interface 34 (I/F).

For the implementation of the ECDSA signature scheme, the interface unit 34 is adapted for receiving a message *m* and for outputting a bi-dimensional signature *(r,s)* associated to said message *m.*

For the implementation of the ECDSA verification scheme, the interface unit 34 is adapted for receiving a bi-dimensional signature *(r,s)* associated to a message *m.*

In view of the foregoing, it will be apparent to the one with ordinary skills in the art that ECDSA signature and verification schemes can be performed without the usage of *R².* Stated otherwise, smart use of the properties of the Montgomery Multiplication in view of the little Fermat theorem allows an optimized way to obtain an ECDSA signature of a message and to check validity of such an ECDSA signature.

In addition, a person skilled in the art will appreciate that various parameters disclosed in the description may be modified and that various embodiments disclosed and/or claimed may be combined without departing from the scope of the invention.

## Claims

1. A cryptographic method comprising an Elliptic Curve Digital Signature Algorithm, ECDSA, signature scheme comprising:
- generating a bi-dimensional signature *(r,s)* having a first signature component *r* and a second signature component *s,* said bi-dimensional signature *(r,s)* being associated to a message *m,*
wherein generating the bi-dimensional signature *(r,s)* comprises:
- generating (31) a random number *k* ;
- obtaining (32) a bi-dimensional value *(x₁,y₁)* having a first component *x₁* and a second component *y₁*, and corresponding to *k×G*, where *G* is a bi-dimensional generator point of the elliptic curve;
- setting (33) *r* to *x₁* modulus *n*, where *n* is a prime number corresponding to the elliptic curve order;
- generating (30) *s* as *k⁻¹×(e*+*r*×*d*), where *k⁻¹* is the inverse of *k,* where *d* is a private key scalar number and where e equals *H(m)* with *H* being a hash function, said generating comprising :
- calculating (301) a first value *(e+r×d)×R⁻¹* by the addition of the Montgomery multiplication of *r* and *d* modulus *n,* to the Montgomery multiplication of e and unity modulus *n ;*
- calculating (302) a second value *(k×R⁻¹)ⁿ⁻²×R mod n* as the exponentiation of the Montgomery form of *k×R⁻¹* to the power *n-2* modulus *n* and thus obtaining *k⁻¹×R²* as said second value,
- obtaining (305) *s* by calculating the Montgomery multiplication between the second value *k⁻¹×R²* and the first value *(e+r×d)×R⁻¹ mod n.*

2. A computer program product comprising one or more stored sequences of instructions that are accessible to a processor and which, when executed by the processor, cause the processor to carry out the steps of the method of claim 1.

3. A cryptographic system comprising
- an interface unit (34) for receiving a message *m* and for outputting a bi-dimensional signature *(r,s)* associated to said message *m*; and,
- a computer unit (30) adapted to generate the bi-dimensional signature *(r,s)* using an Elliptic Curve Digital Signature Algorithm, ECDSA, signature scheme according to Claim 1.

4. A cryptographic method comprising an Elliptic Curve Digital Signature Algorithm, ECDSA, verification scheme,
wherein the verification scheme comprises:
- receiving a bi-dimensional signature *(r,s)* having a first signature component *r* and a second signature component *s,* said bi-dimensional signature *(r,s)* being associated to a message *m;*
- generating (40) the Montgomery form of *s⁻¹*, where *s⁻¹* is the inverse of *s,* said generating comprising:
- calculating (401) a first value *(s×R⁻¹)ⁿ⁻²×R* as the exponentiation of the Montgomery form of *s×R⁻¹* to the power *n-2,* where *n* is a prime number corresponding to the elliptic curve order and *R* is a given number coprime with *n,* with *R² mod n* being the Montgomery Constant, and thus obtaining *s⁻¹×R²* as said first value;
- calculating (403) the Montgomery Multiplication of the first value *s⁻¹×R²* with the unity, to obtain a second value *s⁻¹×R mod n,*
- calculating (43) a third value u₁ as the Montgomery multiplication between the second value *s⁻¹×R* and *e modulus N,* where e equals *H(m)* with *H* being a hash function; and
- calculating (43) a fourth value *u₂* as the Montgomery multiplication between the second value *s⁻¹×R* and the first signature component *r modulus N,* and
- calculating (44) a bi-dimensional value *(x₁,y₁)* having a first component *x₁* and a second component *y₁,* and corresponding to the addition of *u₁×G* and *u₂×Q,* where *G* is a bi-dimensional generator point of the elliptic curve and Q is a public key point which equals *d×G*, with d being a private key scalar number; and,
- determining (45) that the signature is valid if the first component value *x₁ modulus N of* the bi-dimensional value *(x₁,y₁)* equals *r.*

5. A computer program product comprising one or more stored sequences of instructions that are accessible to a processor and which, when executed by the processor, cause the processor to carry out the steps of the method of claim 4.

6. A cryptographic system comprising:
- an interface unit (34) for receiving a bi-dimensional signature *(r,s)* associated to a clear text message *m;* and,
- a computer unit (30) adapted to determine whether the signature *(r,s)* is valid using an Elliptic Curve Digital Signature Algorithm, ECDSA, signature scheme according to Claim 4.
